# EUROPEAN PATENT SPECIFICATION

(11) **EP 0 387 542 B1**
(45) Date of publication and mention of the grant of the patent: **04.05.1994**
(21) Application number: 90102999.1
(22) Date of filing: 16.02.1990
(51) Int. Cl.: F17C 13/02, G01M 3/22

(54) **Device for detecting leaks in liquid petroleum gas containers**
Leckanzeigevorrichtung für Behälter von flüssigem Erdölgas
Dispositif de détection de fuites de récipients de gaz à pétrole liquide

(30) Priority: 17.03.1989 ES 8900870 U
(43) Date of publication of application: 19.09.1990
(73) Proprietor: REPSOL-BUTANO, S.A., E-28015 Madrid (ES)
(72) Inventor: Antunez Jimenez, José,, E-28028 MADRID (ES); Vela Lubreras, Antonio,, E-28033 MADRID (ES)
(74) Representative: Grättinger, Günter

(56) References cited:
- FR-A- 1 370 740
- FR-A- 2 034 202

## Description

The invention refers to a device for detecting leaks in liquid petroleum gas containers (butane/propane) in accordance with the preamble of claim 1. Such devices are destined for application to those containers charged with the aforementioned gas, for the purpose of verifying if the container valves have a leak or not, and in the case of a leak, to divert them from the production line.

A device of the generic type is disclosed in FR-A-2034202. It comprises a conveyor by means of which the containers are removed from the filling station and are fed to the detection station. When a container transported on the conveyor reaches the detection station it contacts a switch activating a device to stop the container. A hood is lowered then to enclose the container valve. A sample is taken and fed to a detector in order to check whether or not gas escapes from the container.

In the prior art device, the detector checks only the valve of the filled container as well as the joint between said valve and the container itself, since these are the only points where there can be leaks.

It is evident that the bottles and/or containers which are charged or filled with gas for being sold, must pass through a series of checks which are made at various points on the corresponding production belts or lines. Among these checks, one is of vital importance, because of the possible drastic consequences, that of verifying if the container shows any sign of leaking, an operation which is carried out before the container reaches the final point of the production line, where the container is then stored for subsequent distribution and/or sale.

The detection of leaks is a limiting factor in the corresponding operation, a limiting factor which is imposed by the high speed at which the containers should be examined to keep up with the rhythm of delivery. In particular the above mentioned prior art device suffers from the disadvantage that the leak detecting step is time consuming. This is since in any case lowering of the hood, taking of a sample and analysing of the latter is necessary. In this respect, other systems for carrying out the detection of possible leaks require a large number of sensors in order to be able to maintain that rapid rhythm on the production line.

It is an object of the present invention to provide for a leak detecting device of the generic type having a high rate without any detriment to sensitivity and reliability. This object is solved by the features indicated in the characterizing portion of claim 1.

On the basis of this, a device has been researched and conceived, which is the one that the invention proposes, by means of which a rate of 1400 containers/hour is achieved, and an effective detecting sensitivity of 1 gr/hour of gas.

In a more specific way, the device forms part of the structure corresponding to the production line, the following composing the most fundamental elements or parts:
- A centering mechanism, by means of which the proper and correct position of the container to be analysed is achieved, within the structure which the device forms part of.
- A braking mechanism, provided to hold up the entry or passage of a container when another one is still at the stage of being analysed.
- An expelling unit takes care of diverting the containers which show signs of leaking.
- A detector of large scale leaks which carries out a primary detecting operation so that in the case that the container shows signs of large scale leaks, it sends the relevant signal for the expelling unit to operate and remove from the line that container.
- A collector hood, under which the container's valve is situated, for the purpose of a sample being taken, by means of a venturi effect, and drawn to the detector for it to be analysed.
- A pair of detector heads, one of which is held in reserve and will enter into operation only when the other reaches a level of contamination higher than certain pre-established limits
- Some control units for the governing and logical control of the system.

To aid the better understanding of the characteristics of the invention, a detailed description is going to be made, based on a set of drawings which are attached to this description, forming an integral part of it, and in which in a purely orientative and non-limiting way the following has been described:

In the 1st. diagram, a general view in perspective, in schematic form, of the invention's detecting device is shown.

In the 2nd. diagram, an overhead view of the same device is shown.

In the 3rd. diagram, a side elevation view of that same device is finally shown.

In the said diagrams, the numbered references correspond to:
1.- General structure.
2.- Gas containers.
3.- Container (2) transporter.
4.- Brake unit.
5.- Detector of large scale leaks.
6.- Detector's (5) mechanical unit.
7.- Container's (2) valve.
8.- Entry guide.
9.- Collector hood.
10.- Pneumatic cylinder operating the hood (9)
11.- Analysing detectors.
12.- Mobile trolley for centering of containers (2).
13.- Trolley's (12) wheels.
14.- Pneumatic cylinder for operating the trolley (12).
15.- Static wheels.
16.- Expelling unit with spring.
17.- Diverter.
18.- Control panel.

In accordance with what can be seen in these diagrams, the overall device includes an entry structure (1) for the containers (2) to be checked, and they gain access on a transporter (3). At the beginning of the structure (1) a braking unit or mechanism (4) has been provided for the purpose of retaining the respective container (2) in the case that another one is in the large scale leak detector station, this latter corresponding to the reference (5), and it is composed of a mechanical unit (6) situated at a high level in relation to the upper part of the container (2) with the purpose that this latter, on its passage below the said mechanical unit (6) inserts its valve (7) laterally into it, all of this in such a way that in the case that there is a large scale escape of gas, the stream of it, emitted by a defective valve (7), will provoke the tripping of a small device entrusted with sending a signal to the entry guide (8), with the purpose of the latter expelling and removing that container from the production line, at the same time as it prevents the lowering of the collector hood (9), this latter being attached to a pneumatic operating cylinder (10). The said hood (9) serves to isolate the zone to be examined; that is, the valve (7) and the joint between it and the respective container (2), forming an air chamber from which a sample will be extracted by venturi effect and it will reach one of the detectors (11) in order to be analysed.

In the said station; that is to say, when the container (2) is situated below the hood (9), it having already passed the large scale leak detector, since this container does not have a large scale leak, it is necessary that it is correctly centered and retained for the length of time that the manoeuvre lasts. To this effect, a trolley (12) equipped with a pair of wheels (13) has been provided, which is operated by a pneumatic cylinder (14), so that the travel of the said trolley (12) pushes the container (2) to position it, remaining held against the pairs of static wheels (15).

By means of an expelling unit (16), provided with a spring, it is possible to make the container (2) return to the centre of the transporter, to be withdrawn when the trolley (12) releases it.

At the same time, the device includes the already mentioned detectors (11), in such a way that one is in service and the other in reserve, the two having been combined so that when the one in service reaches a defined level of contamination, the other one automatically enters into operation, its cleaning being started by means of compressed air. This arrangement allows erroneous rejections to be avoided which could happen because of the progressive rarification of the detector head, due to small leaks and to the rarified atmosphere in the bottling plant.

With regard to the leak detector properly speaking, it is of the catalytic combustion type, commonly used in all the apparatus which measure the concentration of combustible gases in the atmosphere at levels below the lower limit of explosiveness.
Finally, to say that at the exit a diverter (17) for the removal of the containers (2) has been provided and that the equipment includes a control unit or panel (18).

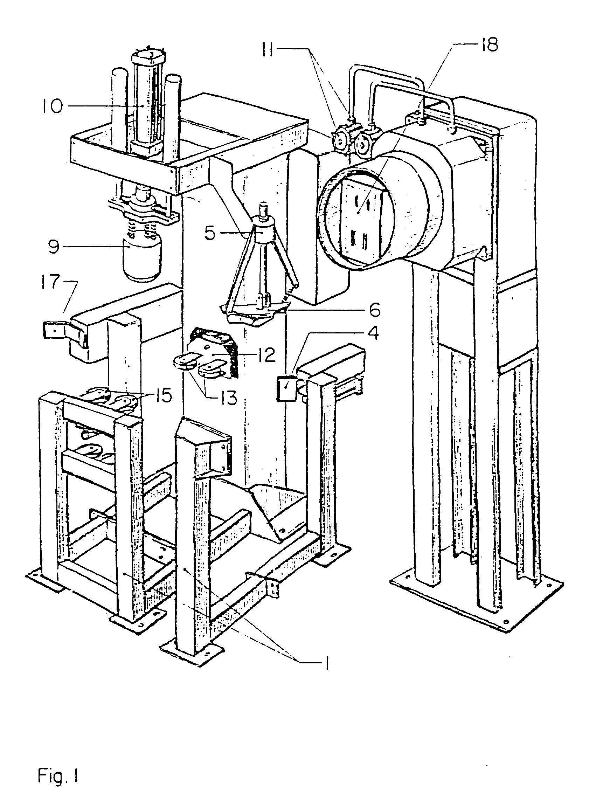

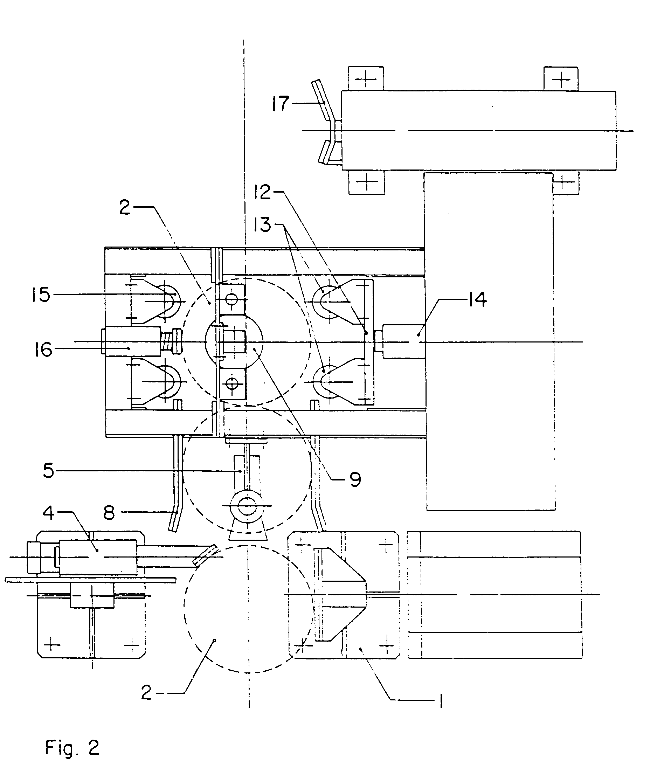

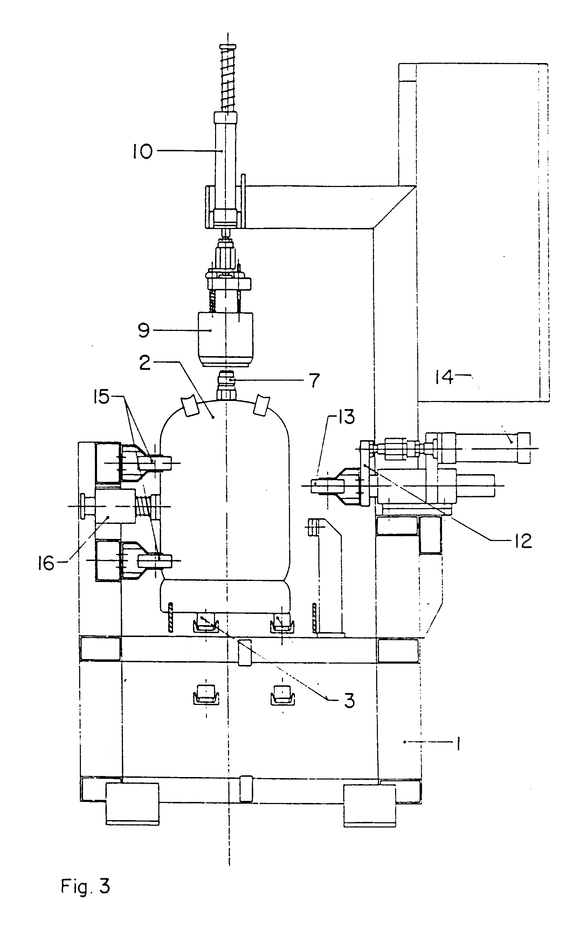

## Claims

1. Device for detecting leaks in liquid petroleum gas containers (2), designed to form part of a production line on which container filling, checks and/or analyses take place, comprising
- a normal detection zone with an overhead collector hood (9) under which the container valve (7) is positioned and in which a sample is taken and sent to a detector for analysis,
- means (12) for positioning and centering the container in said normal detecting zone,
- a diverter (17) at the exit of the detecting zone and
- a connection to a control and governing unit (18) for all components,
characterized by
- a braking mechanism (4) at the entrance of the detecting zone to prevent the entry of a container (2) when another one is in the detecting zone,
- a large scale detecting zone between said braking mechanism and said normal detecting zone, including a large scale leak detector (5, 6) facing the container valve (7), on the passage of the container (2) along the production line,
- said large scale leak detector (5,6) sending a signal to an entry guide (8) which diverts the respective container (2) from the production line in the case of a leak.

2. Device according to claim 1
characterized in that
a pair of detector heads is assigned to the normal detection zone, one of which heads is held in reserve and will enter in into operation only when the other head reaches a level of contamination higher than certain preestablished limits.

3. Device according to claim 1
characterized in that
the means for positioning and centering the container (2) in the normal detecting zone is formed by a trolley (12) moveable by the action of a pneumatic cylinder (14) and equipped with a pair of wheels (13) which push the container (2) towards other sets of static wheels (15), functioning as a stop, and set in the opposite lateral zone and facing that where the trolley (12) is located.

## Patentansprüche

1. Vorrichtung, um undichte Stellen in Behältern, die flüssiges Erdgas enthalten (2), zu entdecken, die dazu bestimmt ist, ein Bestandteil eines Fließbandes zu sein, auf welchem das Füllen der Behälter, Kontrollen und/oder Analysen stattfinden, welches flogendes enthält:
- eine normale Entdeckungszone mit einer von oben gesteuerten Sammelhaube (9), unter welcher das Behälterventil (7) eingestellt wird, und in welcher eine Probe genommen wird und zu einem Anzeiger für Analyse geschickt wird,
- Mittel (12) um den Behälter in der besagten normalen Entdeckungszone einzustellen und zu zentrieren,
- eine Ableitungsanlage (17) am Ausgang der Entdeckungszone und
- eine Verbindung zu einer Kontroll- und Führungsanlage (18) für alle Bestandteile,
dadurch gekennzeichnet, daß
- ein Bremsmechanismus (4) am Eingang der Entdeckungszone, um die Einfahrt eines Behälters (2) zu vermeiden, wenn ein anderer in der Entdeckungszone ist,
- eine groß angelegte Entdeckungszone zwischen dem besagten Bremsmechanismus und der besagten Entdeckungszone, die einen groß angelegten Anzeiger für undichte Stellen (5,6) enthält, der dem Behälterventil (7) gegenübersteht, beim Durchgang des Behälters (2) entlang des Fließbandes,
- benanter groß angelegter Anzeiger für undichte Stellen (5,6), der ein Signal zu einer Eingangsführung (8) sendet, welche den jeweiligen Behälter (2) vom Fließband ableitet, wenn es sich um eine undichte Stelle handelt.

2. Vorrichtung nach Anspruch 1, dadurch gekennzeichnet daß ein Paar Anzeigerköpfe zur normalen Entdeckungszone zugewiesen sind, wobei einer der beiden Köpfe in Reserve gehalten wird, und er nur dann in Kraft tritt wenn der andere Kopf einen Verschmutzungsgrad erreicht, der über gewissen vorgeschriebenen Grenzwerten liegt.

3. Vorrichtung nach Anspruch 1, dadurch gekennzeichnet daß das Mittel, um den Behälter (2) in der normalen Entdeckungszone einzustellen und zu zentrieren, aus einem Transporter (12) besteht, der durch den Mechanismus eines Luftzylinders (14) bewegt werden kann, und der mit einen Paar Rädern (13) ausgestattet ist, die den Behälter (2) in die Richtung anderer Sets statischer Räder (15) schieben, die als Halt funktionieren, und die sich in der entgegengesetzten lateralen Zone befinden und der Zone, wo sich der Transporter (12) befindet, gegenüberliegen.

## Revendications

1. Mécanisme pour détecter les fuites des containers remplis de gaz de pétrole liquide (2), désignés pour faire partie d'une ligne de production sur laquelle le remplissage, les contrôles et/ou les analyses ont lieu, comprenant:
- une zone normale de détection avec un capuchon de collection, placé au-dessus (9), sous lequel la soupape du container (7) est placée et dans lequel un échantillon est pris et envoyé à un détecteur por l'analyse,
- un moyen (12) pour placer et centrer le container dans la zone normale de détection en question,
- un mécanisme de déviation (17) à la sortie de la zone de détection et
- une conexion à une unité de contrôle et de manipulation (18) pour tous les membres composants,
qui se caractérise par:
- un mécanisme de frein (4) à l'entrée de la zone de détection pour éviter l'entrée d'un container (2) quand un autre est dans la zone de détection,
- une grande zone de detection (echelle) entre le mécanisme de frein et la zone normale de détection comprenant une grande echelle de detection de fuite (5,6) en face de la soupape du container (7), sur le passage du container (2) le long de la ligne de production,
- ledit detecteur de fuite (5,6), envoyant un signe à un guide d'entrée (8) qui dévie ce container (2) de la ligne de production en cas de fuite.

2. Mécanisme selon la revendication 1, qui se caractérise par le fait q'une paire de têtes de détecteurs est assignée à la zone normale de détection, une de ces têtes sera maintenue en réserve, et se mettra en marche seulement quand láutre tête atteint un niveau de contamination supérieur à certaines limites préetablies.

3. Mécanisme selon la revendication 1, qui se caractérise par le fait que le moyen pour placer et centrer le container (2) dans la zone normale de détection se compose d'un chariot (12) pouvant être mû par l'action d'un cylindre pneumatique (14) et equipé d'une paire de roues (13) qui poussent le container (2) vers d'autres sets de roues statiques (15), fonctionnant comme un arrêt, et placé dans la zone opposée latérale et en face de celle où se trouve le chariot (12).
